# EUROPÄISCHE PATENTSCHRIFT

(11) **EP 2 063 230 B1**
(45) Veröffentlichungstag und Bekanntmachung des Hinweises auf die Patenterteilung: **09.09.2015**
(21) Anmeldenummer: 08168385.6
(22) Anmeldetag: 05.11.2008
(51) Int. Cl.: G01D 5/245, G01D 5/36

(54) **Optische Positionsmesseinrichtung**
Optical positioning device
Dispositif optique de mesure de la position

(30) Priorität: 23.11.2007 DE 102007056612
(43) Veröffentlichungstag der Anmeldung: 27.05.2009
(73) Patentinhaber: Dr. Johannes Heidenhain GmbH, 83301 Traunreut (DE)
(72) Erfinder: Wagner, Johannes, 83373, Taching/Tengling (DE); Gries, Sebastian, 83346, Bergen (DE)

(56) Entgegenhaltungen:
- EP-A2- 0 058 302
- EP-A2- 0 453 971
- WO-A1-01/31297
- US-A- 4 451 731

## Beschreibung

Die vorliegende Erfindung betrifft eine optische Positionsmesseinrichtung, die zur Bestimmung der Relativposition zweier zueinander beweglicher Objekte geeignet ist und an mindestens einer Referenzposition entlang der Messstrecke ein Referenzimpulssignal liefert.

Bekannte inkrementale Positionsmesseinrichtungen umfassen zur Bestimmung der Relativlage zweier zueinander beweglicher Objekte auf Seiten eines Maßstabes eine Inkrementalteilungsspur. Über eine relativ zum Maßstab in mindestens einer Messrichtung bewegliche Abtasteinheit wird die Inkrementalteilungsspur zur Erzeugung von Inkrementalsignalen abgetastet. Zur Herstellung eines Absolutbezugs besitzen derartige Positionsmesseinrichtungen zudem die Möglichkeit zur Erzeugung von Referenzimpulssignalen an definierten bzw. vorgegebenen Referenzpositionen entlang der Messstrecke. Zu diesem Zweck ist auf Seiten des Maßstabs z.B. benachbart zur Inkrementalteilungsspur eine weitere Spur mit einer Referenzmarkierung an ein oder mehreren vorgegebenen Referenzpositionen angeordnet. Die Referenzmarkierung besteht üblicherweise aus einer Vielzahl, in Messrichtung aperiodisch angeordneter Teilbereiche mit unterschiedlichen optischen Eigenschaften. Im Fall einer Auflicht-Abtastung handelt es sich etwa um Teilbereiche unterschiedlicher Reflektivität, im Fall einer Durchlichtabtastung besitzen die Teilbereiche unterschiedliche Durchlässigkeiten.

Die gegenüber dem Maßstab in Messrichtung bewegliche Abtasteinheit ist mit dem jeweils anderen Objekt verbunden und umfasst eine Lichtquelle, eine Referenzimpuls-Detektoranordnung sowie ggf. weitere Komponenten zur Inkrementalsignalerzeugung; letztere sind im vorliegenden Zusammenhang aber nicht weiter von Bedeutung. Die Referenzimpuls-Detektoranordnung besteht aus einzelnen optoelektronischen Detektorelementen, deren geometrische Anordnung zur Erzeugung eines Referenzimpulssignals auf die Referenzmarkierung abgestimmt ist. Üblicherweise besitzt die Referenzimpuls-Detektoranordnung hierbei die gleiche Struktur wie die Referenzmarkierung.

Beim Überfahren der Referenzmarkierung resultiert in einer solchen Positionsmesseinrichtung nunmehr ein Signalmaximum des Referenzimpulssignals an der jeweiligen Referenzposition. In den Bereichen benachbart zur Referenzposition liegen mehr oder weniger ausgeprägte Nebenmaxima des Referenzimpulssignals vor. Im Fall von besonderes stark ausgeprägten Nebenmaxima resultiert aufgrund eines verringerten Störabstands zwischen einem Signal-Grundpegel und dem Signalmaximum eine gewisse Unsicherheit bei der Detektion des eigentlichen Signalmaximums an der Referenzposition.

Zur Lösung dieses Problems ist in der US 4,451,731 bzw. in der DE 20 2005 002 622 U1 bereits vorgeschlagen worden, zur Unterdrückung von Nebenmaxima im resultierenden Referenzimpulssignal benachbart zur eigentlichen Referenzmarkierung auf dem Maßstab weitere Strukturelemente bzw. Zusatzstrukturen vorzusehen. Die hierzu eingesetzten Zusatzstrukturen bestehen hierbei aus nicht-reflektierenden oder opaken Strichen benachbart zur Referenzmarkierung und gewährleisten bei bestimmten Abtastkonfigurationen eine Dämpfung der Nebenmaxima des Referenzimpulssignals

Aus der EP 0 453 971 A2 ist die Ausbildung einer hochauflösenden Referenzmarkierung für eine optische Positionsmesseinrichtung bekannt. Die Referenzmarkierung auf dem Maßstab umfasst hierzu zwei, in radialer Richtung benachbart angeordnete, komplementär ausgebildete aperiodische Strukturen. Abtastseitig ist eine Abtastplatte vorgesehen, die entsprechend hierzu ausgebildete Abtastbereiche für die Referenzmarkierung aufweist. Über einen iterativen Ansatz werden die aperiodischen Strukturen optimiert, um ein möglichst gut detektierbares Nutzsignal als Referenzsignal erfassbar zu machen.

Aufgabe der vorliegenden Erfindung ist es, eine Positionsmesseinrichtung anzugeben, die eine nochmals verbesserte Erzeugung eines Referenzimpulssignales an ein oder mehreren Referenzposition entlang der Messstrecke ermöglicht und hierbei insbesondere eine sichere Detektion desselben gewährleistet.

Diese Aufgabe wird gelöst durch eine Positionsmesseinrichtung mit den Merkmalen des Anspruches 1.

Vorteilhafte Ausführungsformen der erfindungsgemäßen Positionsmesseinrichtung ergeben sich aus den Maßnahmen in den abhängigen Ansprüchen.

Erfindungsgemäß ist nunmehr vorgesehen, dass die Zusatzstrukturen zur Dämpfung der Nebenmaxima mindestens zwei Spuren mit einer ersten optischen Eigenschaft umfassen, zwischen denen ein sich in Messrichtung erstreckender Teilbereich mit einer zweiten optischen Eigenschaft angeordnet ist. Im Fall eines Durchlicht-Systems wären die optischen Eigenschaften nicht-durchlässig (erste optische Eigenschaft) bzw. durchlässig (zweite optische Eigenschaft) zu wählen; in einem ebenfalls möglichen Auflicht-System wären die optischen Eigenschaften gering-reflektierend (erste optische Eigenschaft) bzw. höher reflektierend (zweite optische Eigenschaft) zu wählen.

Es wird eine erfindungsgemäße optische Positionsmesseinrichtung angegeben, die zur Bestimmung der Relativposition zweier in einer Messrichtung zueinander beweglichen Objekte dient, wobei an mindestens einer definierten Referenzposition ein Referenzimpulssignal erzeugbar ist. Die Positionsmesseinrichtung umfasst einen Maßstab, der mit einem der beiden Objekte verbunden ist und der an der Referenzposition eine Referenzmarkierung aufweist, die aus einer Vielzahl, in Messrichtung (x) aperiodisch angeordneter Teilbereiche mit unterschiedlichen optischen Eigenschaften besteht. In Messrichtung sind benachbart zur Referenzmarkierung jeweils Zusatzstrukturen angeordnet sind, die sich in Messrichtung erstrecken und die Nebenmaxima im resultierenden Referenzimpulssignal minimieren. Ferner umfasst die Positionsmesseinrichtung eine gegenüber dem Maßstab in Messrichtung bewegliche Abtasteinheit, die mit dem anderen Objekt verbunden ist, mit einer Lichtquelle und einer Referenzimpuls-Detektoranordnung, bestehend aus einzelnen Detektorelementen, deren geometrische Anordnung zur Erzeugung eines Referenzimpulssignals auf die Referenzmarkierung abgestimmt ist. Die Zusatzstrukturen umfassen mindestens zwei Spuren mit einer ersten optischen Eigenschaft, zwischen denen ein sich in Messrichtung erstreckender Teilbereich mit einer zweiten optischen Eigenschaft angeordnet ist

Vorzugsweise ist der sich in Messrichtung erstreckende Teilbereich dergestalt zwischen den zwei Spuren angeordnet, dass über den Teilbereich die Detektorelemente der Referenzimpuls-Detektoranordnung mit Licht beaufschlagbar sind.

Die optischen Eigenschaften können gemäß einer der beiden folgenden Varianten gewählt werden:
a) erste optische Eigenschaft: durchlässig; zweite optische Eigenschaft: undurchlässig oder
   oder
b) erste optische Eigenschaft: hoch reflektierend; zweite optische Eigenschaft: gering reflektierend

Es ist möglich, dass der Maßstab als Teilscheibe ausgebildet ist, die mindestens eine kreisringförmig auf der Teilscheibe angeordnete Inkrementalteilungsspur sowie eine hierzu konzentrisch angeordnete Referenzmarkierungsspur aufweist, wobei in der Referenzmarkierungsspur an mindestens einer Stelle die Referenzmarkierung angeordnet ist und im restlichen Bereich der Referenzmarkierungsspur zwei nicht-durchlässige Spuren ausgebildet sind, zwischen denen ein sich in Messrichtung erstreckender durchlässiger Teilbereich angeordnet ist.

Es ist ferner möglich, dass in die Spuren ferner mehrere rechteckförmige Dämpfungsbereiche mit der ersten optischen Eigenschaft eingebracht sind, die sich senkrecht zur Messrichtung erstrecken.

Hierbei können die in die Spuren eingebrachten Dämpfungsbereiche spiegelsymmetrisch zur Referenzmarkierung angeordnet werden .

Die zusätzlich in die Spuren eingebrachten Dämpfungsbereiche sind hierbei vorzugsweise derart angeordnet, dass darüber eine weitere Dämpfung der Nebenmaxima im resultierenden Referenzimpulssignal resultiert.

Die erfindungsgemäßen Maßnahmen lassen sich selbstverständlich sowohl in Verbindung mit linearen als auch mit rotatorischen Positionsmesseinrichtungen einsetzen. Ebenso können sowohl Auflicht- wie auch Durchlichtabtastungen realisiert werden. In allen Fällen resultiert ein Referenzimpulssignal mit minimierten Nebenmaxima, dessen Signalmaximum an der Referenzposition zuverlässig detektiert werden kann.

Weitere Vorteile sowie Einzelheiten der erfindungsgemäßen Positionsmesseinrichtung ergeben sich aus der nachfolgenden Beschreibung eines Ausführungsbeispiels anhand der beiliegenden Figuren.

Dabei zeigt
- Figur 1: den Abtaststrahlengang eines Ausführungsbeispiels der erfindungsgemäßen optischen Positionsmesseinrichtung in einer schematisierten Schnittansicht;
- Figur 2a: eine Draufsicht auf die Teilscheibe der Positionsmesseinrichtung aus Figur 1;
- Figur 2b: eine vergrößerte Teilansicht eines Details der Teilscheibe aus Figur 2a;
- Figur 3: eine Draufsicht auf die Detektionsebene der Positionsmesseinrichtung aus Figur 1 incl. der schematisch angedeuteten Verschaltung zur Referenzimpulserzeugung;
- Figur 4a - 4e: jeweils verschiedene Signale im Zusammenhang mit der erfindungsgemäßen Referenzimpulssignalerzeugung.

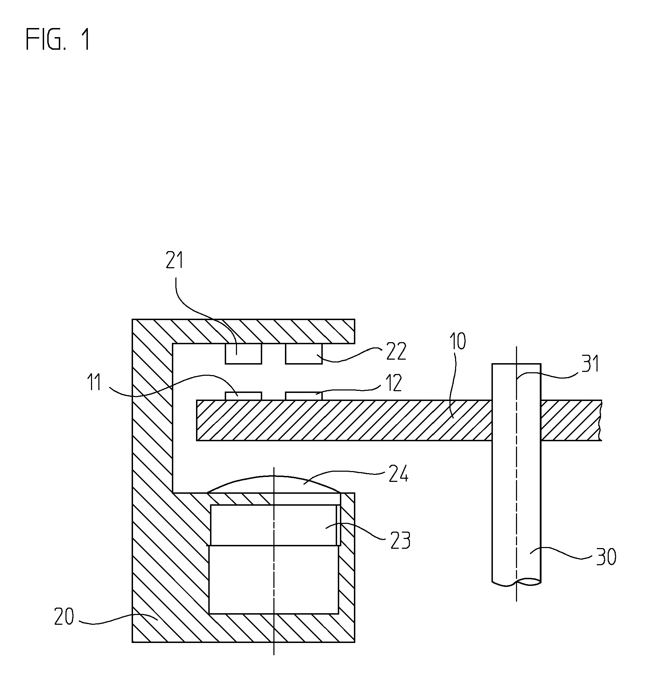

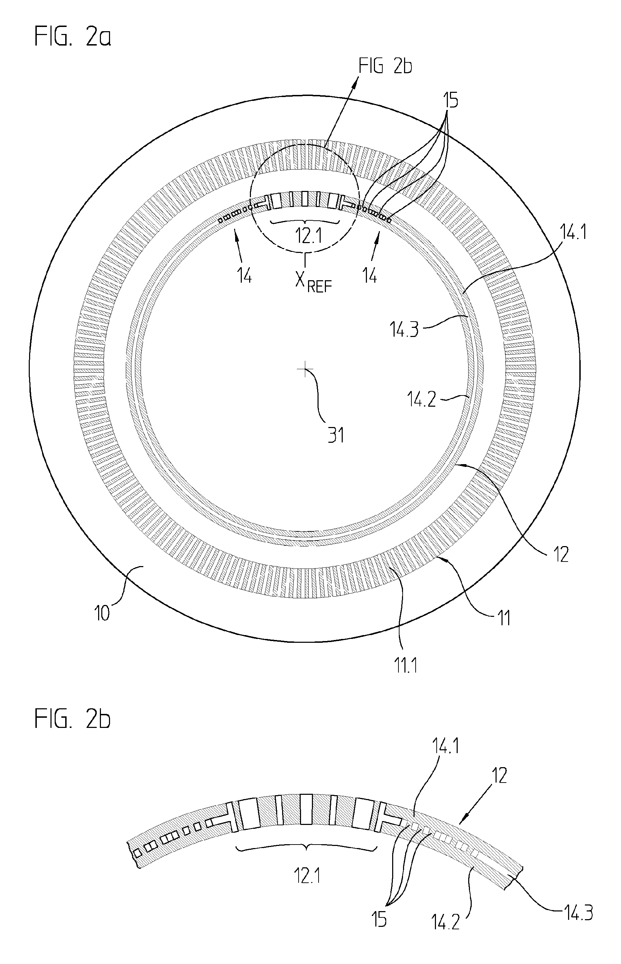

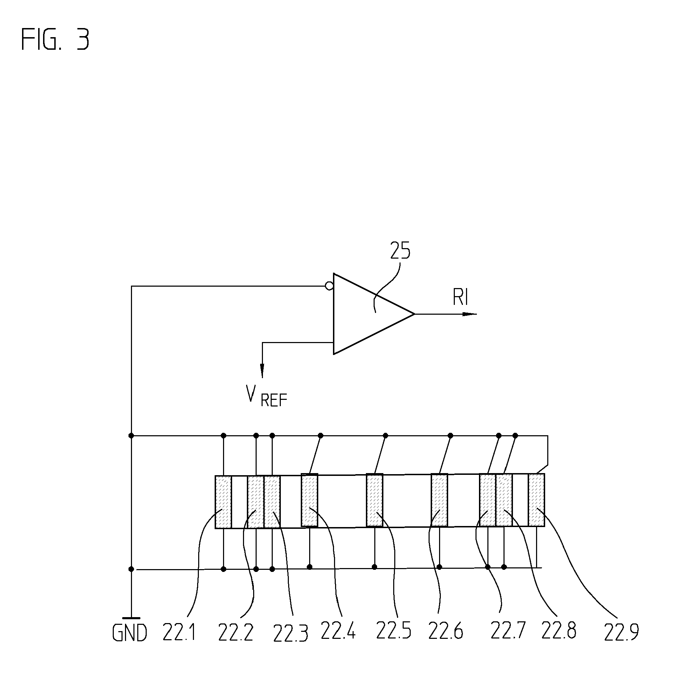

Der Abtaststrahlengang eines Ausführungsbeispiels der erfindungsgemäßen Positionsmesseinrichtung, ausgebildet als rotatorisches Durchlicht-System, sei nachfolgend anhand der schematisierten Schnittansicht in Figur 1 in Verbindung mit den Figuren 2a, 2b und 3 erläutert; letztere Figuren zeigen in ebenfalls schematisierter Form Ansichten des Maßstabs bzw. Teilansichten hiervon sowie die Detektionsebene der Positionsmesseinrichtung aus Figur 1.

Die dargestellte Positionsmesseinrichtung dient zur Erzeugung von Positionsinformationen bzgl. der Relativbewegung eines um die Achse 31 rotierenden Objektes, das in den Figuren nicht dargestellt ist. Eine derartige -einrichtung kann etwa in Werkzeugmaschinen oder in elektrischen Antrieben zum Einsatz kommen und liefert dort Positionsinformationen bzgl. des rotierenden Objekts für eine übergeordnete Steuereinheit.

Im dargestellten Ausführungsbeispiel einer rotatorischen Positionsmesseinrichtung umfasst diese einerseits einen Maßstab 10 in Form einer Teilscheibe, auf der eine kreisringförmige um die Achse 31 angeordnete inkrementale Messteilung 11.1 in einer Inkrementalteilungsspur 11 sowie an mindestens einer Referenzposition x_{REF} eine Referenzmarkierung 12.1 in einer Referenzmarkierungsspur 12 angeordnet ist. Die Referenzmarkierungsspur 12 ist bzgl. der Achse 31 konzentrisch zur Inkrementalteilungsspur 11 angeordnet.

Die Messteilung 11.1 besteht aus alternierend angeordneten Teilbereichen mit unterschiedlichen optischen Eigenschaften, welche jeweils rechteckförmig ausgestaltet sind. Hierbei sind im vorliegenden Beispiel einer Durchlichtabtastung die Teilbereiche durchlässig (erste optische Eigenschaft) und undurchlässig (zweite optische Eigenschaft) ausgebildet; in den Figuren sind die undurchlässigen Teilbereiche mit einer Schraffur versehen, die durchlässigen Teilbereiche weisen keine Schraffur auf. Die undurchlässigen Teilbereiche können etwa mit einer Chrom-Beschichtung versehen sein, während die durchlässigen Teilbereiche als entsprechende Fensterbereiche in einem Glas-Trägersubstrat ausgebildet sind. Als Teilungsperiode TP_{M} der Messteilung 11.1 sei die Breite von zwei benachbarten Teilungsbereichen (durchlässig, undurchlässig) in Messrichtung x bezeichnet. Die Teilscheibe ist zentriert an einer um die Rotationsachse 31 rotierenden Welle 30 angeordnet und besteht aus Glas oder Kunststoff. Die Welle 30 ist mit einem rotierenden Objekt, beispielsweise mit der Welle eines elektrischen Antriebs, verbunden.

Ferner umfasst die dargestellte Positionsmesseinrichtung eine Abtasteinheit 20, die im vorliegenden Beispiel stationär gegenüber der in Umfangsrichtung bzw. Messrichtung x rotierenden Teilscheibe 10 angeordnet ist. Zur Abtasteinheit 20 gehören u.a. eine Lichtquelle 23 mit einer vorgeordneten Kollimatoroptik 24 sowie eine Inkrementalsignal-Detektoranordnung 21 und eine Referenzimpuls-Detektoranordnung 22. Die beiden Detektoranordnungen 21, 22 sind im übrigen üblicherweise in einem sog. Opto-ASIC integriert ausgebildet, in dem neben der Signaldetektion eine weitere Signalverarbeitung bzw. Signalaufbereitung erfolgt.

Im dargestellten Ausführungsbeispiel mit einer sog. Durchlichtabtastung ist die Teilscheibe 10 mit der Inkremental- und der Referenzmarkierungsspur 11, 12 zwischen der Lichtquelle 23 und den Detektoranordnungen 21, 22 angeordnet. Nach dem Durchstrahlen der Strukturen in der Inkremental- und der Referenzmarkierungsspur 11, 12 resultieren in der Detektionsebene entsprechende Muster im Schattenwurf, die über die Inkrementalsignal-Detektoranordnung 21 und eine Referenzimpuls-Detektoranordnung 22 erfasst und in weiterverarbeitbare Signale umgesetzt werden.

Im Fall der Inkrementalsignalerzeugung wird etwa in bekannter Art und Weise ein periodisches Streifenmuster in der Detektionsebene erzeugt, welches über eine Inkrementalsignal-Detektoranordnung 21 mit einem Photodioden-Array erfasst und in ein Paar verschiebungsabhängig modulierte Inkrementalsignale INC_{A}, INC_{B} mit 90° Phasenversatz zueinander umgesetzt wird.

Zur Herstellung eines Absolutbezugs bei der Positionsmessung ist auf der Teilscheibe 10 ferner mindestens an einer definierten Referenzposition x_{REF} eine Referenzmarkierung 12.1 in der Referenzmarkierungsspur 12 angeordnet. Darüber wird an der Referenzposition x_{REF} ein Referenzsignal RI erzeugt, auf das die höher auflösenden (relativen) Inkrementalsignale INC_{A}, INC_{B} dann bezogen werden.

Wie etwa aus der vergrößerten Ausschnittsdarstellung in Figur 2b hervorgeht, besteht die Referenzmarkierung 12.1 an der Referenzposition x_{REF} aus einer Vielzahl von in Messrichtung x aperiodisch angeordneten Teilbereichen mit unterschiedlichen ersten und zweiten optischen Eigenschaften. Im vorliegenden Beispiel einer Durchlichtabtastung sind etwa die in den Figuren nicht-schraffierten Teilbereiche der Referenzmarkierung 12.1 durchlässig ausgebildet, die gepunkteten Bereiche und Teilbereiche auf der Teilscheibe 10 hingegen undurchlässig. Seitlich benachbart zur Referenzmarkierung 12.1 sind in der Referenzmarkierungsspur 12 erfindungsgemäß weitere Zusatzstrukturen 14 angeordnet, auf deren konkrete Ausbildung bzw. Ausgestaltung im Verlauf der nachfolgenden Beschreibung noch detaillierter eingegangen sei.

Selbstverständlich können entlang der jeweiligen Messstrecke bzw. entlang des abgetasteten Teilscheibenumfangs noch mehrere derartige Referenzmarkierungen 12.1 an definierten Positionen benachbart zur Inkrementalteilung 11.1 vorgesehen werden. Beispielsweise können etwa sog. abstandscodierte Referenzmarkierungen angeordnet werden etc..

Abgestimmt auf die jeweilige Ausbildung der maßstabseitigen Referenzmarkierung 12.1 ist in der Referenzimpuls-Detektoranordnung 22 eine geometrische Anordnung von Detektorelementen dergestalt vorgesehen, dass diese auf die Struktur der Referenzmarkierung 12.1 abgestimmt ist. Figur 3 zeigt einen Ausschnitt aus der Detektionsebene mit insgesamt neun rechteckförmigen Detektorelementen 22.1 - 22.9, deren Anordnung derjenigen der durchlässigen Teilbereiche der Referenzmarkierung 12.1 auf dem Maßstab bzw. der Teilscheibe 10 entspricht. Die an den Detektorelementen 22.1 - 22.9 resultierenden Teilsignale werden wie in Figur 3 angedeutet einem Eingang eines Strom-Spannungswandlers 25 zugeführt; an einem zweiten Eingang des Strom-Spannungswandlers 25 liegt eine Referenzspannung V_{ref}. Am Ausgang des Strom-Spannungswandlers 25 resultiert das Referenzimpulssignal RI.

Beim Überfahren der Referenzposition x_{REF} überdecken sich demzufolge die durchlässigen Teilbereiche der Referenzmarkierung 12.1 auf der Teilscheibe 10 und die geometrisch darauf abgestimmt abgeordneten Detektorelemente 22.1 - 22.9 der Referenzimpuls-Detektoranordnung 22. Es resultiert ein Signalmaximum an der Referenzposition x_{REF}, welches als Referenzimpulssignal RI ausgewertet und weiterverarbeitet wird.

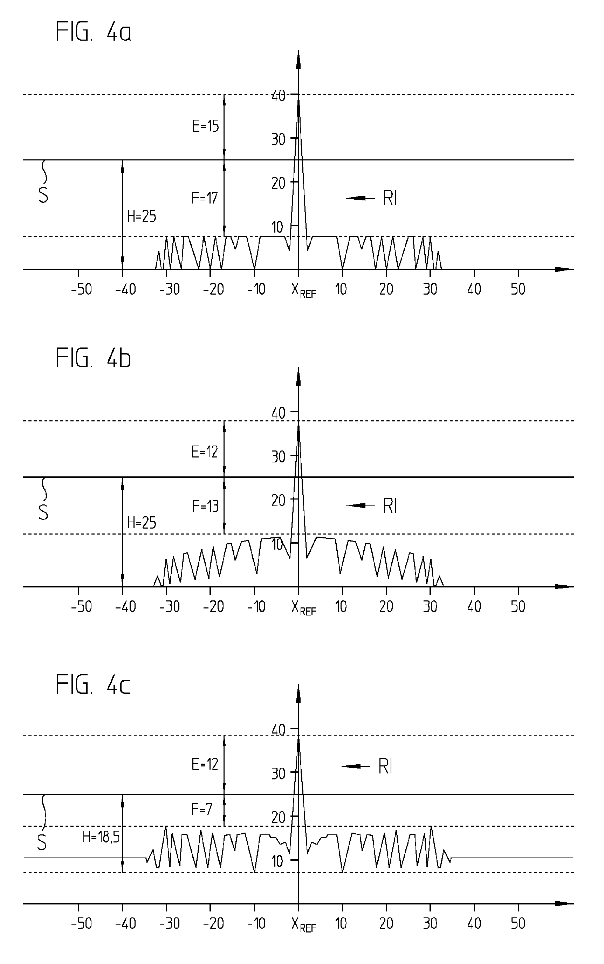

In Figur 4a ist ein im Idealfall resultierendes Referenzimpulssignal RI an der Referenzposition x_{REF} gezeigt. Eingezeichnet sind in Figur 4a ferner eine Schaltschwelle S, die zur Erzeugung von weiterverarbeitbaren Signalen aus dem Referenzimpulssignal RI genutzt wird sowie verschiedene Größen E, F, H, die in Bezug auf eine sichere Detektion des Referenzimpulssignals RI von Bedeutung sind, wie nachfolgend noch erläutert wird. Maßgeblich für eine sichere Detektion des Referenzimpulssignals RI ist hierbei insbesondere, dass das Signalmaximum an der Referenzposition x_{REF} hinreichend groß gegenüber den benachbarten Nebenmaxima ausfällt, also insbesondere die Größen E und F hinreichend groß sind bzw. günstige Verhältnisse der Größen E zu H bzw. F zu Hvorliegt. Im idealisierten Fall der Figur 4a beträgt E/H = 15/25 = 0.60 und F/H = 17/25 = 0.68.

In Figur 4b ist der Verlauf des Referenzimpulssignals RI im Bereich der Referenzposition x_{REF} gezeigt, wie er real resultiert, wenn keine Zusatzstrukturen 14 benachbart zur Referenzmarkierung 12.1 auf der Teilscheibe 10 angeordnet sind. Wie aus der Figur 4b ersichtlich ist, fällt aufgrund der Form der Nebenmaxima mit einer glockenförmigen Einhüllenden benachbart zur Referenzposition x_{REF} im Vergleich zum Idealfall in Figur 4a insbesondere die Größe F = 13 kleiner als im Idealfall der Figur 4a aus; das Verhältnis F/H = 13/25 = 0.52 ist in diesem Fall kleiner und damit ungünstiger als Idealfall. In der Praxis würde deshalb eine verringerte Detektionssicherheit bzgl. des Referenzimpulssignals RI resultieren.

Erfindungsgemäß ist daher vorgesehen, seitlich benachbart zur Referenzmarkierung 12.1 auf der Teilscheibe 10 die bereits erwähnten Zusatzstrukturen 14 anzuordnen, die die Signalform des Referenzimpulssignals RI insbesondere im Bereich der Nebenmaxima günstig beeinflussen.

Wie aus Figur 2a ersichtlich, umfassen die Zusatzstrukturen 14 in diesem Beispiel zwei nicht-durchlässige Spuren 14.1, 14.2 in der Referenzmarkierungsspur 12, zwischen denen ein sich in Umfangsrichtung bzw. Messrichtung erstreckender durchlässiger Teilbereich 14.3 angeordnet ist. Der durchlässige Teilbereich 14.3 ist hierbei mittig zwischen den beiden nichtdurchlässigen Spuren 14.1, 14.2 angeordnet. Grundsätzlich ist bei der Anordnung des durchlässigen Teilbereichs 14.3 zu beachten, dass dieser in Überdeckung mit den Detektorelementen 22.1 - 22.9 der Referenzimpulssignal-Detektoranordnung 22 platziert wird, so dass im Bereich benachbart zur Referenzposition x_{REF} über den durchlässigen Teilbereich 14.3 Licht auf diese Detektorelemente 22.1 - 22.9 gelangen kann.

In Figur 4c ist der Signalverlauf des Referenzimpulssignals RI dargestellt, wie er sich in einer Positionsmesseinrichtung mit derartigen Zusatzstrukturen 14 wie soeben erläutert ergibt. Deutlich erkennbar ist hierbei aus Figur 4c, dass nunmehr der vormals ungünstige, glockenförmige Signalverlauf im Bereich der Nebenmaxima vermieden werden kann und ein günstigeres Verhältnis E/H = 0.65 im Vergleich zur Figur 4b erreicht werden kann. Eine nochmals verbesserte Signalform wäre an dieser Stelle zu erreichen, wenn das Referenzimpulssignal RI elektronisch verstärkt würde; auf diese Art und Weise ließe sich etwa insbesondere die Größe E + F im resultierenden Signal vergrößern, was eine weitere Steigerung der Detektionssicherheit zur Folge hätte.

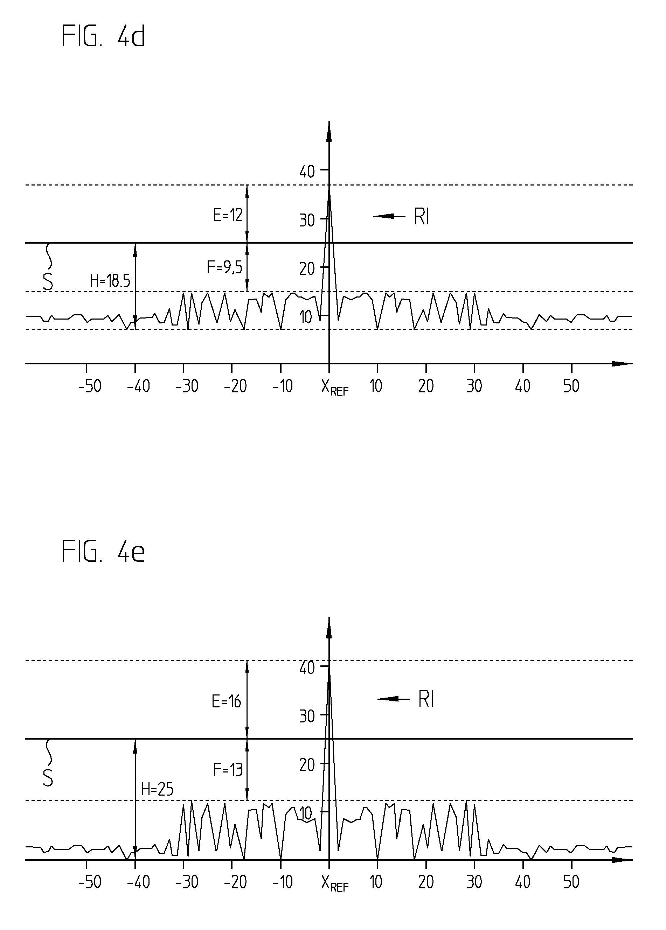

Im dargestellten Ausführungsbeispiel der Figuren 1 - 3 ist ergänzend zu den bisher erläuterten erfindungsgemäßen Maßnahmen, d.h. dem Vorsehen der Zusatzstrukturen 14, ferner vorgesehen, benachbart zur Referenzmarkierung 12.1 im Bereich der Zusatzstrukturen in die Spuren 14.1, 14.2 bzw. in den Teilbereich 14.3 mehrere rechteckförmige nicht-durchlässige Dämpfungsbereiche 15 einzubringen, die sich senkrecht zur Umfangsrichtung bzw. zur Messrichtung erstrecken. Die Anordnung der Dämpfungsbereiche 15 in die Zusatzstrukturen 14 ergibt sich hierbei aus einem Optimierungsverfahren, über das ermittelt wird, an welcher Stelle die zusätzlichen Dämpfungsbereiche 15 einzubringen sind, um eine nochmals verbesserte Signalform des Referenzimpulssignals RI bzw. dessen Detektionssicherheit zu gewährleisten; in diesem Zusammenhang sei auf die Darstellung in Figur 2b verwiesen, die den Bereich der Referenzmarkierung 12.1 in einer vergrößerten Ansicht zeigt. Das aufgrund dieser Maßnahmen resultierende Referenzimpulssignal RI ist in Figur 4d dargestellt. Hierbei resultiert durch die zusätzlichen Dämpfungsbereiche 15 eine weitere Dämpfung bzw. Minimierung der unerwünschten Nebenmaxima im Referenzimpulssignal RI, was sich durch ein günstigeres Verhältnis F/H = 9.5/18.5 = 0.51 gegenüber dem Signalverlauf in Figur 4c äußert. Unverändert bleibt hierbei das bereits durch das Vorsehen der Zusatzstrukturen 14 optimierte Verhältnis E/H = 0.65. Die Dämpfungsbereiche 15 sind im übrigen spiegelsymmetrisch in Bezug auf die Referenzposition x_{REF} angeordnet.

Einen nochmals optimierten Signalverlauf des Referenzimpulssignals RI zeigt schließlich Figur 4e. Hier wurde das Signal RI, welches aus der Abtastung einer Referenzmarkierung gemäß dem Ausführungsbeispiel der Figuren 1 - 3 gewonnen wurde, nochmals elektronisch verstärkt, wodurch insgesamt größere Werte für die Parameter E, F und H resultieren und dergestalt eine nochmals optimierte Detektionssicherheit gewährleistet werden kann.

Im Rahmen der vorliegenden Erfindung gibt es natürlich noch eine Vielzahl weiterer Ausführungsmöglichkeiten.

So wäre alternativ zum dargestellten Beispiel auch möglich, die äußeren Spuren 14.1, 14.2 durchlässig auszubilden und den mittigen Teilbereich 14.3 undurchlässig.

Ferner ist es grundsätzlich möglich, die erfindungsgemäßen Überlegungen auch für eine Auflichtabtastung einzusetzen. In diesem Fall wären dann etwa die Teilbereiche einer entsprechenden Messteilung gering-reflektierend (erste optische Eigenschaft) und höher reflektierend (zweite optische Eigenschaft ausgebildet). Entsprechend müssten dann die Spuren der Zusatzstrukturen gering-reflektierend und der mittige Teilbereich höher reflektierend ausgebildet werden; die zusätzlichen Dämpfungbereiche würden dann durch gering-reflektierende Teilbereiche gebildet. Auch in diesem Fall könnten die Spuren der Zusatzstrukturen sowie der mittige Teilbereich wiederum anders herum ausgebildet werden.

Ebenso können anstelle von rotatorischen Positionsmessgeräten auch Längenmessgeräte dergestalt ausgebildet werden usw..

## Patentansprüche

1. Optische Positionsmesseinrichtung zur Bestimmung der Relativposition zweier in einer Messrichtung (x) zueinander beweglichen Objekte, wobei an mindestens einer definierten Referenzposition (x_{Ref}) ein Referenzimpulssignal (RI) erzeugbar ist und die Positionsmesseinrichtung folgende Komponenten umfasst:
- einen Maßstab (10), der mit einem der beiden Objekte verbunden ist und der an der Referenzposition (x_{Ref}) eine Referenzmarkierung (12.1) aufweist, die aus einer Vielzahl, in Messrichtung (x) aperiodisch angeordneter Teilbereiche mit unterschiedlichen optischen Eigenschaften besteht, wobei in Messrichtung (x) benachbart zur Referenzmarkierung (12.1) jeweils Zusatzstrukturen (14) angeordnet sind, die sich in Messrichtung (x) erstrecken und die Nebenmaxima im resultierenden Referenzimpulssignal (RI) minimieren;
- eine gegenüber dem Maßstab (10) in Messrichtung (x) bewegliche Abtasteinheit (20), die mit dem anderen Objekt verbunden ist, mit
- einer Lichtquelle (23),
- einer Referenzimpuls-Detektoranordnung (22), bestehend aus einzelnen Detektorelementen (22.1 - 22.9), deren geometrische Anordnung zur Erzeugung eines Referenzimpulssignals (RI) auf die Referenzmarkierung (12.1) abgestimmt ist,
**dadurch gekennzeichnet, dass**
die Zusatzstrukturen (14) mindestens zwei sich entlang der Messrichtung (x) erstreckende Spuren (14.1, 14.2) mit einer ersten optischen Eigenschaft umfassen, zwischen denen ein sich in Messrichtung (x) erstreckender Teilbereich (14.3) mit einer zweiten optischen Eigenschaft angeordnet ist, wobei in den mittigen Teilbereich (14.3) ferner mehrere rechteckförmige Dämpfungsbereiche (15) mit der ersten optischen Eigenschaft eingebracht sind, die sich senkrecht zur Messrichtung (x) erstrecken.

2. Optische Positionsmesseinrichtung nach Anspruch 1, **dadurch gekennzeichnet, dass** der sich in Messrichtung (x) erstreckende Teilbereich (14.3) dergestalt zwischen den zwei Spuren (14.1, 14.2) angeordnet ist, dass über den Teilbereich (14.3) die Detektorelemente (22.1 - 22.9) der Referenzimpuls-Detektoranordnung (22) mit Licht beaufschlagbar sind.

3. Optische Positionsmesseinrichtung nach Anspruch 1, **dadurch gekennzeichnet, dass** die optischen Eigenschaften gemäß einer der beiden folgenden Varianten gewählt sind:
a) erste optische Eigenschaft: durchlässig; zweite optische Eigenschaft: undurchlässig oder
oder
b) erste optische Eigenschaft: hoch reflektierend; zweite optische Eigenschaft: gering reflektierend

4. Optische Positionsmesseinrichtung nach Anspruch 2, **dadurch gekennzeichnet, dass** der Maßstab (10) als Teilscheibe ausgebildet ist, die mindestens eine kreisringförmig auf der Teilscheibe angeordnete Inkrementalteilungsspur (11) sowie eine hierzu konzentrisch angeordnete Referenzmarkierungsspur (12) aufweist, wobei in der Referenzmarkierungsspur (12) an mindestens einer Stelle die Referenzmarkierung (12.1) angeordnet ist und im restlichen Bereich der Referenzmarkierungsspur (12.1) zwei nicht-durchlässige Spuren (14.1, 14.2) ausgebildet sind, zwischen denen ein sich in Messrichtung (x) erstreckender durchlässiger Teilbereich (14.3) angeordnet ist.

5. Optische Positionsmesseinrichtung nach Anspruch 4, **dadurch gekennzeichnet**, das die in die Spuren (14.1, 14.2, 14.3) eingebrachten Bereiche (15) spiegelsymmetrisch zur Referenzmarkierung (12.1) angeordnet sind.

6. Optische Positionsmesseinrichtung nach Anspruch 5 , **dadurch gekennzeichnet**, das die zusätzlich in die Spuren (14.1, 14.2, 14.3) eingebrachten Dämpfungsbereiche (15) derart angeordnet sind, dass darüber eine weitere Dämpfung der Nebenmaxima im resultierenden Referenzimpulssignal (RI) resultiert.

## Claims

1. Optical position measuring device for determining the relative position of two objects movable relative to one another along a measurement direction (x), wherein a reference pulse signal (RI) is generable at at least one defined reference position (x_{Ref}) and the position measuring device comprises the following components:
- a scale (10) which is connected to one of the two objects and has a reference marking (12.1) at the reference position (x_{Ref}), which reference marking consists of a multiplicity of portions with different optical properties arranged aperiodically in the measurement direction (x), wherein additional structures (14), which extend in the measurement direction (x) and minimize the secondary maxima in the resulting reference pulse signal (RI), are respectively arranged adjacent to the reference marking (12.1) in the measurement direction (x);
- a scanning unit (20) which is movable in relation to the scale (10) in the measurement direction (x), connected to the other object and comprises:
- a light source (23),
- a reference pulse detector arrangement (22) consisting of individual detector elements (22.1-22.9), the geometric arrangement of which is matched to the reference marking (12.1) for producing a reference pulse signal (RI),
**characterized in that**
the additional structures (14) comprise at least two tracks (14.1, 14.2) extending along the measurement direction (x) and having a first optical property, between which is arranged a portion (14.3) extending in the measurement direction (x) and having a second optical property, wherein furthermore a plurality of rectangular damping regions (15) extending perpendicular to the measurement direction (x) and having the first optical property are introduced into the central portion (14.3).

2. Optical position measuring device according to Claim 1, **characterized in that** the portion (14.3) extending in the measurement direction (x) is arranged between the two tracks (14.1, 14.2) in such a way that light is appliable to the detector elements (22.1-22.9) of the reference pulse detector arrangement (22) via the portion (14.3).

3. Optical position measuring device according to Claim 1, **characterized in that** the optical properties are selected in accordance with one of the two following variants:
a) first optical property: transmissive; second optical property: opaque
or
b) first optical property: high reflection; second optical property: low reflection

4. Optical position measuring device according to Claim 2, **characterized in that** the scale (10) is embodied as partial disc, which has at least one incremental division track (11) arranged in a circular ring-shaped manner on the partial disc and, arranged concentrically therewith, a reference marking track (12), wherein the reference marking (12.1) is arranged at at least one point in the reference marking track (12) and two opaque tracks (14.1, 14.2) are formed in the remaining region of the reference marking track (12.1), between which opaque tracks a transmissive portion (14.3) extending in the measurement direction (x) is arranged.

5. Optical position measuring device according to Claim 4, **characterized in that** the regions (15) introduced into the tracks (14.1, 14.2, 14.3) are arranged in a mirror symmetric manner in relation to the reference marking (12.1).

6. Optical position measuring device according to Claim 5, **characterized in that** the damping regions (15) additionally introduced into the tracks (14.1, 14.2, 14.3) are arranged in such a way that as a result thereof there is further damping of the secondary maxima in the resulting reference pulse signal (RI).

## Revendications

1. Dispositif optique de mesure de position pour la détermination de la position relative de deux objets mobiles l'un par rapport à l'autre dans une direction de mesure (x), dans lequel, au niveau d'au moins une position de référence (x_{Ref}) définie, un signal impulsionnel de référence (RI) peut être généré et le dispositif de mesure de position comprenant les composants suivants :
- une échelle graduée (10) qui est reliée à l'un des deux objets et qui présente, au niveau de la position de référence (x_{Ref}), une marque de référence (12.1) se composant d'une pluralité de zones partielles disposées de manière apériodique en direction de mesure (x) avec des propriétés optiques différentes, dans lequel, en direction de mesure (x), des structures additionnelles (14) respectives sont disposées au voisinage de la marque de référence (12.1), lesquelles s'étendent en direction de mesure (x) et minimisent les lobes secondaires dans le signal impulsionnel de référence (RI) résultant ;
- une unité de balayage (20) mobile par rapport à l'échelle graduée (10) en direction (x), laquelle est reliée à l'autre objet, avec
- une source lumineuse (23),
- un agencement de détection à impulsion de référence (22) se composant d'éléments de détection (22.1 - 22.9) individuels dont l'agencement géométrique est adapté à la marque de référence (12.1) pour la génération d'un signal impulsionnel de référence (RI),
**caractérisé en ce que**
les structures additionnelles (14) comprennent au moins deux pistes (14.1, 14.2) avec une première propriété optique s'étendant le long de la direction de mesure (x), entre lesquelles est disposée une zone partielle (14.3) avec une deuxième propriété optique s'étendant en direction de mesure (x), dans lequel, dans la zone partielle (14.3) du milieu, plusieurs zones d'atténuation (15) de forme rectangulaire avec la première propriété optique sont en outre intégrées, lesquelles s'étendent perpendiculairement à la direction de mesure (x).

2. Dispositif optique de mesure de position selon la revendication 1, **caractérisé en ce que** la zone partielle (14.3) s'étendant en direction de mesure (x) est disposée entre les deux pistes (14.1, 14.2) de telle sorte que, sur la zone partielle (14.3), les éléments de détection (22.1 - 22.9) du dispositif de détection à impulsion de référence (22) peuvent être exposés à la lumière.

3. Dispositif optique de mesure de position selon la revendication 1, **caractérisé en ce que** les propriétés optiques sont choisies conformément à l'une des deux variantes suivantes :
a) première propriété optique : transparence ; deuxième propriété optique : sans transparence
ou
b) première propriété optique : réflexion élevée ; deuxième propriété optique : réflexion faible.

4. Dispositif optique de mesure de position selon la revendication 2, **caractérisé en ce que** l'échelle graduée (10) est réalisé en tant que disque partiel qui présente au moins une piste à graduation incrémentale (11) disposée en forme d'anneau de cercle sur le disque partiel ainsi qu'une piste à marque de référence (12) disposée de manière concentrique à celle-ci, dans lequel, dans la piste à marque de référence (12), la maque de référence (12.1) est disposée à au moins un endroit, et dans le reste de la zone de la piste à marque de référence (12.1), deux pistes non transparentes (14.1, 14.2) étant réalisées entre lesquelles est disposée une zone partielle (14.3) transparente s'étendant en direction de mesure (x).

5. Dispositif optique de mesure de position selon la revendication 4, **caractérisé en ce que** les zones (15) intégrées dans les pistes (14.1, 14.2, 14.3) sont disposées en symétrie spéculaire par rapport à la marque de référence (12.1).

6. Dispositif optique de mesure de position selon la revendication 5, **caractérisé en ce que** les zones d'atténuation (15) intégrées additionnellement dans les pistes (14.1, 14.2, 14.3) sont disposées de manière à ce qu' il en résulte par ce biais une atténuation supplémentaire des lobes secondaires dans le signal impulsionnel de référence (RI) résultant.
